# EUROPÄISCHE PATENTSCHRIFT

(11) **EP 2 297 365 B1**
(45) Veröffentlichungstag und Bekanntmachung des Hinweises auf die Patenterteilung: **23.01.2013**
(21) Anmeldenummer: 09779918.3
(22) Anmeldetag: 24.06.2009
(51) Int. Cl.: C21B 13/00, C21B 13/14

(54) **VERFAHREN UND SYSTEM ZUR ENERGIEOPTIMIERTEN EISENHERSTELLUNG MIT OPTIMIERTEM CO2-AUSSTOSS**
METHOD AND SYSTEM FOR ENERGY-OPTIMIZED AND CO<SB>2</SB>EMISSION-OPTIMIZED IRON PRODUCTION
PROCÉDÉ ET INSTALLATION DE PRODUCTION DE FONTE AVEC OPTIMISATION ÉNERGÉTIQUE ET DES ÉMISSIONS DE CO<SB>2</SB>

(30) Priorität: 17.07.2008 AT 11162008
(43) Veröffentlichungstag der Anmeldung: 23.03.2011
(73) Patentinhaber: Siemens VAI Metals Technologies GmbH, 4031 Linz (AT)
(72) Erfinder: BÜRGLER, Thomas, A-4221 Steyregg (AT); LACKNER, Stephan, A-4040 Linz (AT); MILLNER, Robert, A-3382 Loosdorf (AT); REDL, Reinhard, A-4020 Linz (AT); RUMMER, Bernhard, A-4020 Linz (AT); SCHMID, Herbert, A-4621 Sipbachzell (AT); WURM, Johann, A-4283 Bad Zell (AT); ZOBERNIG, Andreas, A-4060 Leonding (AT)
(74) Vertreter: Maier, Daniel Oliver
(86) Internationale Anmeldenummer: PCT/EP2009/057871
(87) Internationale Veröffentlichungsnummer: WO 2010/006905

(56) Entgegenhaltungen:
- WO-A-97/13880
- US-A- 5 989 308

## Beschreibung

Die vorliegende Erfindung betrifft eine Verfahren zur energie- und emissionsoptimierten Eisenerzeugung sowie eine Anlage zur Durchführung des Verfahrens.

Bei Schmelzreduktionsverfahren zur Erzeugung von Roheisen wird in einem Einschmelzvergaser aus Kohlenstoffträgern und sauerstoffhältigem Gas ein sogenanntes Generatorgas erzeugt, welches als reduzierende Komponenten CO und H₂ enthält. Das Generatorgas wird in einem zugeordneten Reduktionsreaktor als Reduktionsgas genutzt. Der im Reduktionsreaktor erzeugte Eisenschwamm wird in den Einschmelzvergaser zur Erzeugung von flüssigem Roheisen chargiert. Da das Generatorgas eine für die im Reduktionsreaktor ablaufenden Prozesse zu hohe Temperatur besitzt, wird es durch Einleitung eines Kühlgases auf die im Reduktionsreaktor benötigte Temperatur hinuntergekühlt.

W09733006 zeigt eine Direktreduktionsanlage, in der Kühlgas durch Abkühlung eines Teiles des Generatorgases in einem Gas-Staubwäscher bereitgestellt wird. Nachteilig ist dabei, dass große Energiemengen vom Generatorgas in das Wasser des Gas-Staubwäschers abgegeben werden, ohne bei der Eisenerzeugung genutzt zu werden.

Im Reduktionsreaktor wird nicht der gesamte Gehalt des Reduktionsgases an reduzierenden Komponenten für die Reduktion zu Eisenschwamm verbraucht, so dass das aus dem Reduktionsreaktor entnommene Topgas noch Reduktionskraft besitzt. Aus W09733006 ist es bekannt, die im Topgas verbliebenen reduzierenden Komponenten für Eisenerzeugung in einem weiteren Reduktionsschacht zu nutzen. Dazu wird eine Mischung aus den gewaschenen Topgasen des Reduktionsreaktors und des weiteren Reduktionsschachtes von dem nicht reduzierenden Bestandteil CO₂ befreit, mittels Wärmeaustauschern und Nachverbrennung in Reduktionsgasöfen erwärmt und, gegebenenfalls nach Vereinigung mit einer Teilmenge des von Staub gereinigten Generatorgases, in den weiteren Reduktionsschacht eingeleitet. Auch WO 97/13880 offenbart ein solches Verfahren. Die Mischung aus den gewaschenen Topgasen des Reduktionsreaktors und des weiteren Reduktionsschachtes ist CO₂ reich, da in beiden Reduktionsaggregaten Reduktionsarbeit verrichtet wird. Nachteilig ist bei dieser Verfahrensführung die Notwendigkeit, die infolge der Wäsche der Topgase kühle Mischung aufwändig auf die im weiteren Reduktionsschacht benötigte Temperatur zu erhitzen. Nachteilig ist weiters die Abgabe großer Energiemengen an das Wasser der Gas-Staubwäscher ohne Nutzung für die Eisenerzeugung. Weiterhin müssen die Anlagenteile zum Wärmeaustausch sowie zur Nachverbrennung groß genug ausgelegt werden, um die dem weiteren Reduktionsschacht zugeführten Gasmengen, die einen Großteil seines Reduktionsgasbedarfes decken müssen, bewältigen zu können. Entsprechend große Anlagenteile sind aufwändiger zu betreiben und benötigen zu ihrer Funktion Energie, beispielsweise als Brenngasverbrauch in den Reduktionsgasöfen, die den Energieverbrauch der Gesamtanlage pro Mengeneinheit produzierten Eisens erhöht. Da der Energiebedarf durch fossile Energieträger gedeckt wird, bedeutet erhöhter Energieverbrauch automatisch auch erhöhte CO₂-Emissionen.

Es ist die Aufgabe der vorliegenden Erfindung, ein Verfahren bereitzustellen, bei der die zur Erzeugung einer Mengeneinheit Eisen benötigte Energie sowie die damit verbundenen CO₂-Emissionen reduziert werden. Ebenso soll eine Anlage zur Durchführung eines solchen Verfahrens bereitgestellt werden.

Diese Aufgabe wird gelöst durch ein Verfahren zur Herstellung von flüssigem Roheisen oder flüssigen Stahlvorprodukten und Eisenschwamm aus von, vorzugsweise stückigem, Eisenerz und gegebenenfalls Zuschlägen gebildeten Einsatzstoffen, wobei die Einsatzstoffe in einer ersten Reduktionszone zu Eisenschwamm direkt reduziert werden, der Eisenschwamm in einem Einschmelzvergaser unter Zufuhr von Kohlenstoffträgern und sauerstoffhältigem Gas erschmolzen und ein CO- und H₂-hältiges Generatorgas erzeugt wird, welches nach Ausleitung aus dem Einschmelzvergaser erst gekühlt und dann entstaubt wird, und eine erste Teilmenge des bei dieser Entstaubung erhaltenen Reduktionsgases als erstes Reduktionsgas in die erste Reduktionszone eingeleitet, dort umgesetzt und als Topgas abgezogen wird, welches anschließend einer Staubwäsche unterworfen wird und nach erfolgter Staubwäsche zum Teil oder vollständig einer Verdichtung und einer CO₂-Wäsche unterzogen wird,
dadurch gekennzeichnet, dass nach der CO₂-Wäsche zumindest eine Teilmenge A des CO₂-gewaschenen Gases dem Generatorgas nach dessen Austritt aus dem Einschmelzvergaser zugemischt wird, wobei die Kühlung des Generatorgases erfolgt, und eine zweite Teilmenge des bei der Entstaubung erhaltenen Reduktionsgases mindestens einer weiteren Reduktionszone zur Direktreduktion von weiterem Eisenerz, gegebenenfalls unter Zumischung einer Teilmenge B des CO₂-gewaschenen Gases nach deren Erwärmung, als zweites Reduktionsgas zugeführt wird.

Bei dieser Verfahrensführung wird die durch Wäsche und CO₂-Entfernung ohnehin schon kühl vorliegende Teilmenge A des CO₂-gewaschenen Gases als Kühlgas genutzt. Bei dieser Verfahrensführung wird auf einen wie in W09733006 beschriebenen Kühlgaskreislauf verzichtet, Energieverluste an das Wasser der Gas-Staubwäscher eines derartigen Kühlgaskreislaufes werden also vermieden. Da das aus der ersten Reduktionszone austretende Topgas eine geringere Temperatur besitzt als das Generatorgas, wird bei der Abkühlung des Topgases im Gas-Staubwäscher eine geringere Temperaturdifferenz überwunden, so dass der Energieverlust an das Wasser des Gas-Staubwäschers für Topgas im Vergleich zu einem Gas-Staubwäscher für Generatorgas zusätzlich vermindert wird. Durch die Verminderung der Energieverluste an das Wasser der Gas-Staubwäscher werden somit der spezifische Energieverbrauch zur Herstellung einer Mengeneinheit Eisen und entsprechend die CO₂-Emissionen pro Mengeneinheit produzierten Eisens vermindert. Zudem ergibt sich der Vorteil, dass die als Kühlgas genutzte Teilmenge A des CO₂-gewaschenen Gases in den Reduktionsprozess rezirkuliert wird und die in ihm enthaltenen reduzierenden Komponenten erneut den ersten Reduktionsreaktor durchlaufen können. Dadurch ergibt sich eine bessere Ausnutzung der Reduktionskraft der im Einschmelzvergaser erzeugten reduzierenden Komponenten. Entsprechend muss zur Reduktion einer bestimmten Menge Eisenerz weniger Generatorgas erzeugt werden, was wiederum den Energieverbrauch und damit die CO₂-Emissionen pro Mengeneinheit Produkt vermindert.

Der weiteren Reduktionszone wird als zweites Reduktionsgas eine zweite Teilmenge des bei der Entstaubung erhaltenen Reduktionsgases, oder gegebenenfalls ein Gemisch bestehend aus dieser zweiten Teilmenge und aus durch Staubentfernung und CO₂-Entfernung aufbereitetem sowie erwärmtem Topgas zugeführt. Da die zweite Teilmenge des Reduktionsgases auf seinem Weg in die weitere Reduktionszone weder gekühlt wird noch an Reduktionskraft verliert, wird ihr thermischer und chemischer Energieinhalt optimal für die Reduktion in der weiteren Reduktionszone und damit zur Eisenerzeugung genutzt. Zusätzlich wird durch die Verwertung der Reduktionskraft des zugemischten aufbereiteten sowie erwärmten Topgases in der weiteren Reduktionszone die Ausnutzung der im Einschmelzvergaser erzeugten reduzierenden Komponenten für die Eisenerzeugung verbessert.

Mit stückigem Eisenerz sind sowohl Stückerz als auch Pellets gemeint.

Das zweite Reduktionsgas wird in der weiteren Reduktionszone umgesetzt und als zweites Topgas abgezogen. Nach einer vorteilhaften Ausführungsform des erfindungsgemäßen Verfahrens wird das zweite Topgas nach einer Staubwäsche mit dem staubgewaschenen Topgas aus der ersten Reduktionszone vereinigt und die erhaltene Gasmischung zum Teil oder vollständig einer Verdichtung und einer CO₂-Wäsche unterzogen, wobei die weitere Nutzung nach der CO₂-Wäsch analog der Teilmenge A und der Teilmenge B des CO₂-gewaschenen Gases gemäß Anspruch 1 erfolgt.
Auf diese Weise wird auch der thermische und chemische Energieinhalt des zweiten Topgases für die Eisenerzeugung genutzt, was wiederum den Energieverbrauch und damit die CO₂-Emissionen pro Mengeneinheit Produkt vermindert.

Gemäß einer bevorzugten Ausführungsform steuert die zweite Teilmenge des bei der Entstaubung erhaltenen Reduktionsgases im Normalbetrieb zu Vol% bis 100 Vol%, einer bevorzugten Ausführungsform bevorzugt 20 bis 50 Vol%, noch mehr bevorzugt 25 -35 Vol% zum zweiten Reduktionsgas bei.

Im Rahmen der vorliegenden Anmeldung handelt es sich bei allen auf Gase bezogene Prozentangaben um Volumsprozente. Je höher der Anteil der zweiten Teilmenge des bei der Entstaubung erhaltenen Reduktionsgases am zweiten Reduktionsgas ist, desto weniger muss die gegebenenfalls zugemischte Teilmenge B des CO₂-gewaschenen Gases erwärmt werden, der spezifische Energieaufwand für deren Erwärmung sinkt also. Das Verhältnis von zweiter Teilmenge des Reduktionsgases und Teilmenge B des CO₂-gewaschenen Gases wird im Wesentlichen bestimmt durch die Generatorgastemperatur und die erforderliche Reduktionsgastemperatur für die erste Reduktionszone, durch die erforderliche Temperatur des zweiten Reduktionsgases, sowie durch die Temperatur des CO₂-gewaschenen Gases vor und nach dessen Aufheizung. Bei Prozentangaben von Bereichen sind im Rahmen dieser Anmeldung die Grenzwerte mit umfasst. Als Normalbetrieb ist dabei der Betrieb nach einer Anfahrphase und vor einer Abstellphase einer Anlage zur Durchführung des erfindungsgemäßen Verfahrens zu verstehen. Je mehr die zweite Teilmenge des Reduktionsgases zum zweiten Reduktionsgas beisteuert, desto geringer sind die Anforderungen an die Erwärmung des zugemischten Gases. Die hohe Temperatur der zweiten Teilmenge des Reduktionsgases stellt eine für die in der weiteren Reduktionszone ablaufenden Prozesse ausreichend hohe Temperatur des zweiten Reduktionsgases sicher. Verminderte Anforderungen an die Erwärmung des zugemischten Gases ermöglichen den Einsatz kleinerer Gaserwärmungsvorrichtungen, die für ihren Betrieb wiederum weniger Energie als größere Anlagen benötigen. Auf diese Weise wird der spezifische Energieverbrauch und entsprechend die CO₂-Emission pro Mengeneinheit Produkt weiter vermindert.

Gemäß der Erfindung macht die zweite Teilmenge im Normalbetrieb zwischen 5 und 50 Vol %, bevorzugt 25-40 Vol%, besonders bevorzugt 30 Vol%, der gesamten Menge des bei der Entstaubung erhaltenen Reduktionsgases aus.

Für den Betrieb des weiteren Reduktionsschachtes ist eine bestimmte Menge an zweitem Reduktionsgas notwendig. Wird eine große Teilmenge des nach der Entstaubung erhaltenen Reduktionsgases für Reduktionszwecke in der ersten Reduktionszone benötigt, steht für die weitere Reduktionszone nur mehr eine kleine Teilmenge zur Verfügung. Die mengenmäßige Differenz dieser Teilmenge auf die für den Betrieb der weiteren Reduktionszone benötigte Menge an zweitem Reduktionsgas muss durch Zumischung einer großen Teilmenge B des CO₂-gewaschenen Gases nach deren Erwärmung ausgeglichen werden. Bei der Erwärmung durch Verbrennung entsteht jedoch CO₂, daher führt die Zumischung einer größeren Teilmenge B des CO₂-gewaschenen Gases nach deren Erwärmung zu höherem CO₂ Gehalt im zweiten Reduktionsgas.

Weil der Anteil der zweiten Teilmenge an der gesamten Menge des bei der Entstaubung erhaltenen Reduktionsgases weniger als 5 Vol%, beträgt muss eine große Teilmenge B des CO₂-gewaschenen Gases nach deren Erwärmung zugemischt werden, um die für die weitere Reduktionszone benötigte Menge von zweitem Reduktionsgas bereitzustellen. Von Nachteil ist dabei, dass im Fall der Erwärmung der Teilmenge B durch eine Verbrennung eines Teiles der Teilmenge B große Mengen von reduzierenden Komponenten in der Teilmenge B oxidiert werden und somit für Reduktionszwecke in der weiteren Reduktionszone nicht mehr zur Verfügung steht. Um sicherzustellen, dass die erste Reduktionszone genügend mit Reduktionsgas versorgt wird, soll der Anteil der zweiten Teilmenge an der gesamten Menge des bei der Entstaubung erhaltenen Reduktionsgases nicht mehr als 50 Vol% betragen.

Gemäß einer bevorzugten Ausführungsform macht die Teilmenge A des CO₂-gewaschenen Gases im Normalbetrieb zwischen 15 Vol% und 100 Vol% des CO₂-gewaschenen Gases aus. Bei weniger als 15% sind die Kühlung des heißen Generatorgases und die genaue Temperaturregelung ohne zusätzlichen Kühlgaskreislauf mit Wäscher und Kompressor nicht mehr möglich.

Je mehr CO₂-gewaschenes Gas als Kühlgas verwendet wird, desto mehr reduzierende Komponenten des Topgases werden in den Reduktionsprozess rezirkuliert, desto besser ist die Ausnutzung der im Einschmelzvergaser erzeugten reduzierenden Komponenten und desto weniger Generatorgas muss erzeugt werden. Vorzugsweise wird die Zumischung von Teilmenge A des CO₂-gewaschenen Gases zum Generatorgas entsprechend einer Temperaturvorgabe für das Reduktionsgas geregelt.

Die weitere Reduktionszone kann aus einem Festbett-Reduktionszone oder aus einem oder mehreren in Serie geschalteten Wirbelschichtreduktionszonen bestehen.

Bevorzugterweise ist die weitere Reduktionszone eine Festbett-Reduktionszone, da diese Art einer Reduktionszone den Vorteil eines hohen Metallisierungsgrades mit CO reichem Reduktionsgas sowie eines einfachen Betriebes hat. Dann kann in der weiteren Reduktionszone auch stückiges Eisenerz verarbeitet werden.

Die Erwärmung der Teilmenge B des CO₂-gewaschenen Gases kann beispielsweise mit Wärmetauschern oder mittels partieller Oxidation mit Sauerstoffbrenner erfolgen. Vorteilhafterweise erfolgt sie mittels Sauerstoffbrenner, da eine derartige Aufheizung einen hohen Wirkungsgrad sowie einen geringen apparativen Aufwand besitzt, keinen von außerhalb zuzuführenden Brennstoff benötigt, und gegenüber Wärmeaustauschern geringere CO₂ Emission produziert.

Nach einer bevorzugten Ausführungsform erfolgt die Erwärmung der Teilmenge B des CO₂-gewaschenen Gases zuerst mittels eines Wärmeaustauschers bis auf maximal 500°C und dann mittels eines Sauerstoffbrenners auf über 650°C. Dabei erfolgt der Wärmeaustausch vorzugsweise mit dem ersten und/oder zweiten Topgas vor deren Abkühlung in Gas-Staubwäschern. Über 500°C würde Korrosion des Wärmeaustauschers durch Metal-dusting den Wärmeaustauscher zerstören. Diese Nutzung des Wärmeinhaltes des bei dem Verfahren ohnehin anfallenden Topgases für die Reduktion in der weiteren Reduktionszone minimiert die vom Sauerstoffbrenner zu leistende Temperaturerhöhung, weshalb dieser unter weniger Aufwand von Energie und Einsatzstoffen betrieben werden kann. Somit wird auch der Energieverbrauch und damit die CO₂-Emissionen pro Mengeneinheit Produkt vermindert.

Es ist weiterhin von Vorteil, kleine Teilmengen des CO₂-gewaschenen Gases für Aufgaben bei Verfahren nach dem Oberbegriff des Anspruchs 1 als Ersatz für bisher genutzte externe, dass heißt nicht im Verfahren generierte, Gase zu nutzen, bevorzugt als Eindüsgas zur Feinkohleeindüsung und/oder als Kühlgas beim Chargieren von Einsatzstoffen. Unter Einsatzstoffen sind dabei alle Materialien zu verstehen, die in die erste oder weitere Reduktionszone oder in den Einschmelzvergaser chargiert werden.

Bei diesen beiden Nutzungen gelangt das Gas entweder direkt in die erste oder weitere Reduktionszone, oder es gelangt in den Einschmelzvergaser und von dort in die erste oder weitere Reduktionszone. Dadurch können die enthaltenen reduzierenden Bestandteile an den Reduktionsprozessen teilnehmen. Das führt zu einer besseren Ausnutzung der im Einschmelzvergaser erzeugten reduzierenden Komponenten, weswegen weniger Generatorgas erzeugt werden muss.

Für die Feinkohleeindüsung beziehungsweise als Kühlgas beim Chargieren von Einsatzstoffen wird bisher vorwiegend Stickstoff verwendet, wodurch entsprechend ein Stickstoffanteil im Reduktionsgas resultiert. Dieser nimmt an den Reduktionsprozessen nicht teil und verdünnt die Konzentration reduzierender Bestandteile im Reduktionsgas. Infolgedessen muss, um eine bestimmte Stoffmenge reduzierende Bestandteile zirkulieren zu lassen, die zirkulierende Reduktionsgasmenge im Vergleich zu einem nicht durch Stickstoff verdünnten Reduktionsgas größer sein, worauf die Anlagenteile ausgelegt sein müssen. Durch das Ersetzen des Stickstoff werden diese Effekte vermieden.

Als Eindüsgas zur Feinkohleeindüsung werden maximal 10 Vol%, und als Kühlgas beim Chargieren von Einsatzstoffen maximal 5 Vol% des CO₂-gewaschenen Gases verwendet, um den anderen Verwendungszwecken dieses Gases genügende Gasmengen zur Verfügung stellen zu können.

Vorteilhafterweise wird das aus der weiteren Reduktionszone erhaltene Produkt, beispielsweise teilweise reduziertes Eisenerz (LRI), als ein Ausgangsmaterial zur Eisenerzeugung in einem Hochofen eingesetzt, wobei Sinter-, Pellets- und Stückerz-Ausgangsmaterial ersetzt wird. Da bei dieser Nutzung das dem Hochofen zugegebene Ausgangsmaterial zumindest bereits teilweise reduziert ist, ist weniger Zugabe von Reduktionsmittel, insbesonders Koks, in den Hochofen notwendig. Insgesamt wird durch den Einsatz von LRI im Hochofen, für eine gegebene Menge Eisenprodukt des Verfahrens, die Gesamtbilanz der Eisenerzeugung bezüglich Energieverbrauch und CO₂-Erzeugung verbessert. Diese Verbesserung beruht unter anderem darauf, dass die Reduktion von Eisenoxiden teilweise vom Hochofen in die weitere Reduktionszone verlagert wird, da reduzierende Verbindungen dort effizienter zur Reduktion genutzt werden als im Hochofen. Außerdem wird die Produktivität des Hochofens gleichzeitig gesteigert, da die Permeabilität des Hochofens infolge des Ersatzes von Sinter und/oder Stückerz steigt.

Ein weiterer Gegenstand der vorliegenden Erfindung ist eine Vorrichtung zur Durchführung des erfindungsgemäßen Verfahrens, mit einem ersten Reduktionsreaktor für, vorzugsweise stückiges, Eisenerz, einem Einschmelzvergaser, mindestens einer den Einschmelzvergaser mit dem ersten Reduktionsreaktor verbindenden Förderleitung für das im ersten Reduktionsreaktor gebildete Reaktionsprodukt, mit einer in den Einschmelzvergaser mündenden Zuleitung für Kohlenstoffträger und einer in den Einschmelzvergaser mündenden Zuleitung für sauerstoffhältige Gase, einem am Einschmelzvergaser vorgesehenen Abstich für Roheisen und einem am Einschmelzvergaser vorgesehenen Abstich für Schlacke, und mit mindestens einem weiteren Reduktionsreaktor zur Direktreduktion von weiterem Eisenerz, einer den Einschmelzvergaser und eine Entstaubungseinrichtung verbindenden Ausleitung für Generatorgas, einer Ausleitung für Reduktionsgas aus der Entstaubungseinrichtung, einer die Ausleitung für Reduktionsgas aus der Entstaubungseinrichtung mit dem ersten Reduktionsreaktor verbindenden Leitung, einer vom ersten Reduktionsgasreaktor ausgehenden Topgasleitung, welche in einen Gas-Staubwäscher mündet, einer von dem Gas-Staubwäscher ausgehenden Ausleitung, und mit einer mit der von dem Gas-Staubwäscher ausgehenden Ausleitung verbundenen Abführleitung, in der hintereinander zuerst eine Gasverdichtungsvorrichtung, eine CO₂-Waschanlage und ein Gaserwärmungsvorrichtung angeordnet sind,
dadurch gekennzeichnet, dass
zwischen CO₂-Waschanlage und Gaserwärmungsvorrichtung von der Abführleitung eine Rückführleitung abzweigt, die in die Ausleitung für Generatorgas mündet,
und die Abführleitung in eine von der Ausleitung für Reduktionsgas ausgehende Verbindungsleitung mündet, wobei die Verbindungsleitung in den weiteren Reduktionsreaktor mündet.

Nach einer bevorzugten Ausführungsform ist der weitere Reduktionsreaktor ein Festbett-Reduktionsreaktor. Dann kann im weiteren Reduktionsreaktor auch stückiges Eisenerz verarbeitet werden.

Gemäß einer Ausführungsform geht von dem weiteren Reduktionsreaktor eine Topgasausleitung aus, in der ein Gas-Staubwäscher vorhanden ist, und die vor der Gasverdichtungsvorrichtung in die Abführleitung mündet. In dieser Topgasausleitung wird das aus dem weiteren Reduktionsreaktor abgezogene zweite Topgas zu dem staubgewaschenen Topgas aus der ersten Reduktionszone geführt.

Bevorzugterweise ist die Gaserwärmungsvorrichtung ein Sauerstoffbrenner.

Gemäß einer weiteren Ausführungsform ist in der Abführleitung vor der Gaserwärmungsvorrichtung und/oder in der Topgasausleitung ein Wärmeaustauscher zur Erwärmung der Teilmenge B des CO₂-gewaschenen Gases durch das Topgas und/oder das zweite Topgas vorhanden.

Aus Gründen der Energiebilanz ist dabei eine Anordnung des Wärmaustauschers vor der Abzweigung der Rückführleitung aus der Abführleitung bevorzugt.

Gemäß einer anderen Ausführungsform ist eine Feinkohleeindüsungsanlage am Einschmelzvergaser vorhanden, die mit einer hinter der CO₂-Waschanlage von der Abführleitung abzweigenden Eindüsgasleitung verbunden ist.

Gemäß einer weiteren Ausführungsform sind Chargiervorrichtungen zum Chargieren von Kohlenstoffträgern wie beispielsweise Stückkohle, Kohlebriketts, Koks, in den Einschmelzvergaser, gegebenenfalls Chargiervorrichtungen zum Chargieren von weiteren Einsatzstoffen wie beispielweise Zuschlägen in den Einschmelzvergaser,
Chargiervorrichtungen zum Chargieren von Eisenerz, und gegebenenfalls Zuschlägen, in den ersten und/oder den weiteren Reduktionsreaktor vorhanden,
wobei die Chargiervorrichtungen mit einer hinter der CO₂-Waschanlage von der Abführleitung abzweigenden Kühlungsleitung verbunden sind.

Die Erfindung wird nachfolgend anhand dreier Figuren schematisch dargestellt.
Figur 1 zeigt eine schematische Darstellung einer erfindungsgemäßen Anlage.
Figur 2 zeigt eine Anlage wie in Figur 1, wobei zusätzlich Wärmeaustauscher zur Erwärmung der des CO₂-gewaschenen Gases durch Topgas vorhanden sind.
Figur 3 zeigt eine Anlage wie in Figur 1, wobei zusätzlich Chargiervorrichtungen zum Chargieren in den Einschmelzvergaser, in den ersten und in den weiteren Reduktionsreaktor vorhanden sind.

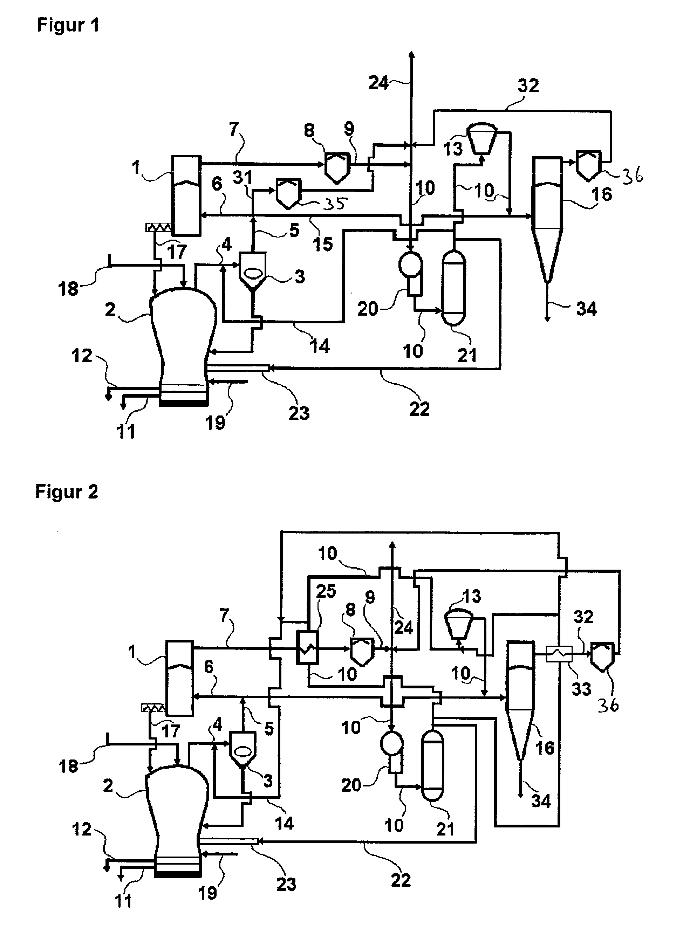

In Figur 1 werden in einen ersten Reduktionsreaktor 1 für Eisenerz über ein nicht dargestelltes Chargiersystem stückiges Eisenerz sowie gegebenenfalls Zuschläge gefüllt. Durch über Leitung 6 in den Reduktionsreaktor 1 eingebrachtes Reduktionsgas wird das Eisenerz zu Eisenschwamm reduziert. In dem darunter angeordneten Einschmelzvergaser 2 wird aus Kohlenstoffträgern, die über Zuleitung 18 chargiert werden, und aus sauerstoffhältigen Gasen, die über Zuleitung 19 in den Einschmelzvergaser 2 eingebracht werden, ein CO- und H₂-hältiges Generatorgas erzeugt. Der in den Einschmelzvergaser über Förderleitung 17 eingebrachte Eisenschwamm wird dabei geschmolzen. Im Einschmelzvergaser 2 entstehendes flüssiges Roheisen und flüssige Schlacke werden über Abstich 11 für Roheisen und Abstich 12 für Schlacke aus dem Einschmelzvergaser entnommen. Das Generatorgas wir über eine Ausleitung 4 aus dem Einschmelzvergaser 2 ausgeleitet, in einer Entstaubungseinrichtung 3, in diesem Fall einem Zyklon, entstaubt und das dabei erhaltene Reduktionsgas über eine Ausleitung 5 aus dem Zyklon ausgeleitet. Eine erste Teilmenge des Reduktionsgases wird über Leitung 6 als erstes Reduktionsgas in den ersten Reduktionsreaktor 1 eingeleitet. Nach Umsatz der ersten Teilmenge des Reduktionsgases im ersten Reduktionsreaktor 1 wird Topgas über eine Topgasleitung 7 aus dem ersten Reduktionsreaktor entnommen und zu einem Gas-Staubwäscher 8 geleitet. Nach erfolgter Staubwäsche wird das Topgas über eine Ausleitung 9 aus dem Gas-Staubwäscher 8 ausgeleitet. Ein Teil des über Ausleitung 9 ausgeleiteten staubgewaschenen Topgases wird als Exportgas über eine Exportgasleitung 24 abgezogen. Der andere Teil des über Ausleitung 9 ausgeleiteten staubgewaschenen Topgases wird über eine Abführleitung 10 zuerst einer Gasverdichtungsvorrichtung 20, dann einer CO₂-Waschanlage 21 zugeführt. Eine Teilmenge A des über Abführleitung 10 aus der CO₂-Waschanlage 21 ausgeführten CO₂-gewaschenen Gases wird über eine von der Abführleitung 10 abzweigende Rückführleitung 14, welche vor der Entstaubungseinrichtung 3 in die Ausleitung 4 mündet, dem aus dem Einschmelzvergaser 2 ausgeleiteten Generatorgas zugemischt. Da die Teilmenge A aufgrund des Durchlaufens des Gas-Staubwäschers 8 und der CO₂-Waschanlage 21 kühler ist als das Generatorgas, wird das Generatorgas durch die Zumischung gekühlt. Die nach Abzweigung der Teilmenge A verbleibende Teilmenge B des über Abführleitung 10 aus der CO₂-Waschanlage 21 ausgeführten CO₂-gewaschenen Gases wird in eine Gaserwärmungsvorrichtung 13, in diesem Fall einen Sauerstoffbrenner, geleitet, in diesem erwärmt und über eine Fortführung der Abführleitung 10 aus dem Sauerstoffbrenner zur Verbindungsleitung 15 geführt. In Verbindungsleitung 15, die den weiteren Reduktionsreaktor 16 mit der Ausleitung 5 verbindet, wird eine zweite Teilmenge des Reduktionsgases geleitet. Da vor der Einmündung der Verbindungsleitung 15 in den weiteren Reduktionsreaktor 16 die Abführleitung 10 in die Verbindungsleitung 15 mündet, wird die im Sauerstoffbrenner erwärmte Teilmenge B des CO₂-gewaschenen Gases der zweiten Teilmenge des Reduktionsgases zugemischt. Das durch diese Zumischung erhaltene zweite Reduktionsgas wird über Verbindungsleitung 15 in den weiteren Reduktionsreaktor 16 eingeleitet. In diesem reduziert es über nicht dargestellte Chargiervorrichtungen eingebrachtes weiteres Eisenerz. Zwischen der CO₂-Waschanlage 21 und der Gaserwärmungsvorrichtung 13 zweigt eine Eindüsgasleitung 22 von Abführleitung 10 ab, durch die CO₂-gewaschenes Gas einer Feinkohleeindüsungsanlage 23 am Einschmelzvergaser 2 zugeführt wird.

Über eine Überschussgasleitung 31, in der ein Gas-Staubwäscher 35 vorhanden ist, kann Reduktionsgas von der Ausleitung 5 direkt in die Exportgasleitung 24 geleitet werden, falls mehr Reduktionsgas erzeugt wird, als in dem Reduktionsreaktor 1 und dem weiteren Reduktionsreaktor 16 benötigt wird.

Eine vom weiteren Reduktionsreaktor 16 ausgehende Topgasausleitung 32, in der ein Gas-Staubwäscher 36 vorhanden ist, mündet vor der Gasverdichtungsvorrichtung 20 in die Abführleitung 10. Durch diese Topgasausleitung kann das aus dem weiteren Reduktionsreaktor 16 abgezogene zweite Topgas zu dem staubgewaschenen Topgas aus dem ersten Reduktionsreaktor geführt werden.

Das Produkt des weiteren Reduktionsreaktors 34 wird einem nicht dargestellten Hochofen als Ausgangsmaterial zur Eisenerzeugung im Hochofen zugeführt.

Figur 2 zeigt eine Anlage wie in Figur 1, wobei in der Topgasleitung 7 ein Wärmeaustauscher 25 und in der Topgasausleitung 32 ein Wärmeaustauscher 33 zur Erwärmung von CO₂-gewaschenem Gas durch Topgas vorhanden sind. Im Wärmeaustauscher 33 erwärmtes Gas kann entweder vor der Gaserwärmungsvorrichtung 13 in die Abführleitung 10 eingespeist werden, oder in die Rückführleitung 14 eingespeist werden. Zur besseren Übersichtlichkeit wurde in Figur 2 auf die Darstellung der ebenfalls vorhandenen und wie in Figur 1 geführten Überschussgasleitung 31 verzichtet.

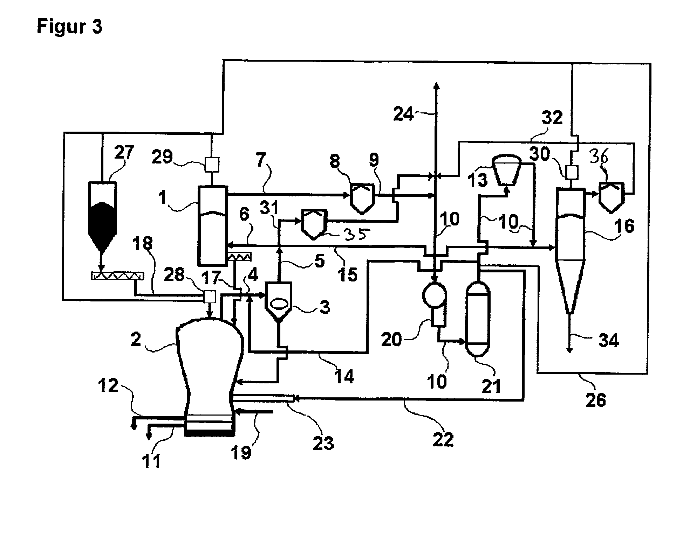

Figur 3 zeigt eine Anlage wie in Figur 1, wobei zusätzlich eine Chargiervorrichtung 27 zum Chargieren von Kohlenstoffträgern in den Einschmelzvergaser, eine Chargiervorrichtung 28 zum Chargieren von weiteren Einsatzstoffen in den Einschmelzvergaser, eine Chargiervorrichtung 29 zum Chargieren von Eisenerz und Zuschlägen in den ersten Reduktionsreaktor und eine Chargiervorrichtung 30 zum Chargieren von Eisenerz und Zuschlägen in den weiteren Reduktionsreaktor vorhanden sind.

Alle diese Chargiervorrichtungen sind mit einer Kühlungsleitung 26 verbunden. Die Kühlungsleitung zweigt hinter der CO₂-Waschanlage 21 von der Abführleitung 10 ab. Durch die Kühlungsleitung 26 wird CO₂-gewaschenes Gas zu Kühlungszwecken zu den Chargiervorrichtungen geleitet.
- 1: erster Reduktionsreaktor
- 2: Einschmelzvergaser
- 3: Entstaubungseinrichtung
- 4: Ausleitung für Generatorgas
- 5: Ausleitung für Reduktionsgas (aus der Entstaubungsvorrichtung)
- 6: Leitung (die Ausleitung für Reduktionsgas aus der Entstaubungsvorrichtung mit dem ersten Reduktionsreaktor verbindend)
- 7: Topgasleitung
- 8/35/36: Gas-Staubwäscher
- 9: Ausleitung (aus dem Gas-Staubwäscher)
- 10: Abführleitung
- 11: Abstich für Roheisen
- 12: Abstich für Schlacke
- 13: Gaserwärmungsvorrichtung
- 14: Rückführleitung
- 15: Verbindungsleitung
- 16: weiterer Reduktionsreaktor
- 17: Förderleitung (für im ersten Reduktionsreaktor gebildetes Reaktionsprodukt)
- 18: Zuleitung für Kohlenstoffträger
- 19: Zuleitung für sauerstoffhaltige Gase
- 20: Gasverdichtungsvorrichtung
- 21: CO₂-Waschanlage
- 22: Eindüsgasleitung
- 23: Feinkohleeindüsungsanlage
- 24: Exportgasleitung
- 25: Wärmeaustauscher
- 26: Kühlungsleitung
- 27: Chargiervorrichtung (zum Chargieren von Kohlenstoffträgern in den Einschmelzvergaser)
- 28: Chargiervorrichtung (zum Chargieren von weiteren Einsatzstoffen in den Einschmelzvergaser)
- 29: Chargiervorrichtung (zum Chargieren von Eisenerz und Zuschlägen in den ersten Reduktionsreaktor)
- 30: Chargiervorrichtung (zum Chargieren von Eisenerz und Zuschlägen in den weiteren Reduktionsreaktor)
- 31: Überschussgasleitung
- 32: Topgasausleitung
- 33: Wärmeaustauscher
- 34: Produkt des weiteren Reduktionsreaktors

## Patentansprüche

1. Verfahren zur Herstellung von flüssigem Roheisen oder flüssigen Stahlvorprodukten und Eisenschwamm aus von, vorzugsweise stückigem, Eisenerz und gegebenenfalls Zuschlägen gebildeten Einsatzstoffen,
wobei die Einsatzstoffe in einer ersten Reduktionszone zu Eisenschwamm direkt reduziert werden, der Eisenschwamm in einem Einschmelzvergaser unter Zufuhr von Kohlenstoffträgern und sauerstoffhältigem Gas erschmolzen und ein CO- und H₂-hältiges Generatorgas erzeugt wird, welches nach Ausleitung aus dem Einschmelzvergaser erst gekühlt und dann entstaubt wird, und eine erste Teilmenge des bei dieser Entstaubung erhaltenen Reduktionsgases als erstes Reduktionsgas in die erste Reduktionszone eingeleitet, dort umgesetzt und als Topgas abgezogen wird, welches anschließend einer Staubwäsche unterworfen wird und nach erfolgter Staubwäsche zum Teil oder vollständig einer Verdichtung und einer CO₂-Wäsche unterzogen wird, **dadurch gekennzeichnet,**
**dass** nach der CO₂-Wäsche zumindest eine Teilmenge A des CO₂-gewaschenen Gases dem Generatorgas nach dessen Austritt aus dem Einschmelzvergaser zugemischt wird, wobei die Kühlung des Generatorgases erfolgt,
und eine zweite Teilmenge des bei der Entstaubung erhaltenen Reduktionsgases mindestens einer weiteren Reduktionszone zur Direktreduktion von weiterem Eisenerz, unter Zumischung einer Teilmenge B des CO₂-gewaschenen Gases nach deren Erwärmung, als zweites Reduktionsgas zugeführt wird,
wobei die zweite Teilmenge des bei der Entstaubung gewonnenen Reduktionsgases im Normalbetrieb zwischen 5 Vol% und 50 Vol%, bevorzugt 20-40 Vol%, besonders bevorzugt 30 Vol%, der gesamten Menge des bei der Entstaubung erhaltenen Reduktionsgases ausmacht.

2. Verfahren nach Anspruch 1, **dadurch gekennzeichnet, dass** die weitere Reduktionszone zur Direktreduktion eine Festbett-Reduktionszone ist.

3. Verfahren nach Anspruch 1 oder 2, **dadurch gekennzeichnet, dass** das aus der weiteren Reduktionszone abgezogene zweite Topgas nach einer Staubwäsche mit dem staubgewaschenen Topgas aus der ersten Reduktionszone vereinigt und die erhaltene Gasmischung zum Teil oder vollständig einer Verdichtung und einer CO₂-Wäsche unterzogen wird, wobei die weitere Nutzung nach der CO₂-Wäsche analog der Teilmenge A und der Teilmenge B des CO₂-gewaschenen Gases gemäß Anspruch 1 erfolgt.

4. Verfahren nach einem der voranstehenden Ansprüche, **dadurch gekennzeichnet, dass** die Teilmenge B des CO₂-gewaschenen Gases mittels Sauerstoffbrenner erwärmt wird.

5. Verfahren nach einem der voranstehenden Ansprüche, **dadurch gekennzeichnet, dass** die Teilmenge B des CO₂-gewaschenen Gases zuerst mittels Wärmetauscher und anschließend mittels Sauerstoffbrenner auf über 650°C erwärmt wird.

6. Verfahren nach einem der voranstehenden Ansprüche, **dadurch gekennzeichnet, dass** die zweite Teilmenge des Reduktionsgases im Normalbetrieb 20 Vol% bis 100 Vol%, bevorzugt 20 bis 50 Vol%, noch mehr bevorzugt 25 -35 Vol% zum zweiten Reduktionsgas beisteuert.

7. Verfahren nach einem der voranstehenden Ansprüche, **dadurch gekennzeichnet, dass** die Teilmenge A des CO₂-gewaschenen Gases im Normalbetrieb zwischen 15 Vol% und 100 Vol% des CO₂-gewaschenen Gases ausmacht.

8. Verfahren nach einem der voranstehenden Ansprüche, **dadurch gekennzeichnet, dass** die Zumischung von Teilmenge A des CO₂-gewaschenen Gases zum Generatorgas entsprechend einer Temperaturvorgabe für das Reduktionsgas geregelt wird.

9. Verfahren nach einem der voranstehenden Ansprüche, **dadurch gekennzeichnet, dass** eine Teilmenge von bis zu 10 Vol% des CO₂-gewaschenen Gases als Eindüsgas zur Feinkohleeindüsung verwendet wird.

10. Verfahren nach einem der voranstehenden Ansprüche, **dadurch gekennzeichnet, dass** eine kleine Teilmenge von bis zu 5 Vol% des CO₂-gewaschenen Gases als Kühlgas beim Chargieren von Einsatzstoffen verwendet wird.

11. Verfahren nach einem der voranstehenden Ansprüche, **dadurch gekennzeichnet, dass** das aus der weiteren Reduktionszone erhaltene Produkt als ein Ausgangsmaterial zur Eisenerzeugung in einem Hochofen eingesetzt wird.

12. Vorrichtung zur Durchführung des erfindungsgemäßen Verfahrens, mit einem ersten Reduktionsreaktor (1) für, vorzugsweise stückiges, Eisenerz, einem Einschmelzvergaser (2), mindestens einer den Einschmelzvergaser (2) mit dem ersten Reduktionsreaktor verbindenden Förderleitung (17) für das im ersten Reduktionsreaktor gebildete Reaktionsprodukt, mit einer in den Einschmelzvergaser mündenden Zuleitung (18) für Kohlenstoffträger und einer in den Einschmelzvergaser mündenden Zuleitung (19) für sauerstoffhältige Gase, einem am Einschmelzvergaser vorgesehenen Abstich (11) für Roheisen und einem am Einschmelzvergaser vorgesehenen Abstich (12) für Schlacke, und mit mindestens einem weiteren Reduktionsreaktor (16) zur Direktreduktion von weiterem Eisenerz, einer den Einschmelzvergaser und eine Entstaubungseinrichtung (3) verbindenden Ausleitung (4) für Generatorgas, einer Ausleitung (5) für Reduktionsgas aus der Entstaubungseinrichtung, einer die Ausleitung (5) für Reduktionsgas aus der Entstaubungseinrichtung mit dem ersten Reduktionsreaktor verbindenden Leitung (6), einer vom ersten Reduktionsgasreaktor ausgehenden Topgasleitung (7), welche in einen Gas-Staubwäscher (8) mündet, einer von dem Gas-Staubwäscher (8) ausgehenden Ausleitung (9), und mit einer mit der von dem Gas-Staubwäscher ausgehenden Ausleitung verbundenen Abführleitung (10), in der hintereinander zuerst eine Gasverdichtungsvorrichtung (20), eine CO₂-Waschanlage (21) und ein Gaserwärmungsvorrichtung (13) angeordnet sind,
**dadurch gekennzeichnet, dass**
zwischen CO₂-Waschanlage (21) und Gaserwärmungsvorrichtung (13) von der Abführleitung (10) eine Rückführleitung (14) abzweigt, die in die Ausleitung (4) für Generatorgas mündet,
und die Abführleitung (10) in eine von der Ausleitung (5) für Reduktionsgas ausgehende Verbindungsleitung (15) mündet, wobei die Verbindungsleitung (15) in den weiteren Reduktionsreaktor mündet.

13. Vorrichtung nach Anspruch 12, **dadurch gekennzeichnet, dass** der weitere Reduktionsreaktor (16) ein Festbett-Reduktionsreaktor ist.

14. Vorrichtung nach Anspruch 12 oder 13, **dadurch gekennzeichnet, dass** von dem weiteren Reduktionsreaktor (16) eine Topgasausleitung (32) ausgeht, in der ein Gas-Staubwäscher vorhanden ist, und die vor der Gasverdichtungsvorrichtung (20) in die Abführleitung (10) mündet.

15. Vorrichtung nach einem der Ansprüche 12 bis 14, **dadurch gekennzeichnet, dass** die Gaserwärmungsvorrichtung (13) ein Sauerstoffbrenner ist

16. Vorrichtung nach einem der Ansprüche 12 bis 15, **dadurch gekennzeichnet, dass** in der Abführleitung (10) vor der Gaserwärmungsvorrichtung (13) und/oder in der Topgasausleitung (32) ein Wärmeaustauscher (25) zur Erwärmung der Teilmenge B des CO₂-gewaschenen Gases durch das Topgas und/oder das zweite Topgas vorhanden ist.

17. Vorrichtung nach einem der Ansprüche 12 bis 16, **dadurch gekennzeichnet, dass** eine Feinkohleeindüsungsanlage (23) am Einschmelzvergaser vorhanden ist, die mit einer hinter der CO₂-Waschanlage (21) von der Abführleitung (10) abzweigenden Eindüsgasleitung (22) verbunden ist.

18. Vorrichtung nach einem der Ansprüche 12 bis 17, **dadurch gekennzeichnet, dass** Chargiervorrichtungen (27) zum Chargieren von Kohlenstoffträgern in den Einschmelzvergaser (2), gegebenenfalls Chargiervorrichtungen (28) zum Chargieren von weiteren Einsatzstoffen in den Einschmelzvergaser (2),
Chargiervorrichtungen (29, 30) zum Chargieren von Eisenerz, und gegebenenfalls Zuschlägen, in den ersten und/oder den weiteren Reduktionsreaktor (1,16)
vorhanden sind,
wobei die Chargiervorrichtungen (27, 28, 29, 30) mit einer hinter der CO₂-Waschanlage (21) von der Abführleitung (10) abzweigenden Kühlungsleitung (26) verbunden sind.

## Claims

1. Process for producing liquid pig iron or liquid primary steel products and sponge iron from charge materials that are formed from iron ore, preferably in lump form, and possibly additions,
wherein the charge materials are reduced directly into sponge iron in a first reduction zone, the sponge iron is smelted in a melter gasifier while carbon carriers and gas containing oxygen are fed in, and a generator gas containing CO and H₂ is produced and, after being discharged from the melter gasifier, is first cooled and then dedusted, and the first partial amount of the reducing gas obtained in this dedusting is introduced as the first reducing gas into the first reduction zone, where it is converted and drawn off as top gas, which is subsequently subjected to dust scrubbing and, once dust scrubbing has taken place, is partly or completely subjected to compression and CO₂ scrubbing,
**characterized**
**in that**, after the CO₂ scrubbing, at least a partial amount A of the CO₂-scrubbed gas is admixed with the generator gas after the latter leaves the melter gasifier, wherein the cooling of the generator gas takes place,
and a second partial amount of the reducing gas obtained in the dedusting is fed to at least one further reduction zone for the direct reduction of further iron ore, with a partial amount B of the CO₂-scrubbed gas being admixed, after being heated,
as a second reducing gas, wherein during normal operation the second partial amount of the reducing gas recovered in the deducting makes up between 5% by volume and 50% by volume, preferably 20 and 40% by volume, particularly preferably 30% by volume, of the overall amount of the reducing gas obtained in the dedusting.

2. Process according to Claim 1, **characterized in that** the further reduction zone for the direct reduction is a solid-bed reduction zone.

3. Process according to Claim 1 or 2, **characterized in that**, after dust scrubbing, the second top gas, drawn off from a further reduction zone, is brought together with the dust-scrubbed top gas from the first reduction zone and the gas mixture obtained is partly or completely subjected to compression and CO₂ scrubbing, further use after the CO₂ scrubbing taking place by analogy with partial amount A and partial amount B of the CO₂-scrubbed gas according to claim 1.

4. Process according to one of the preceding claims, **characterized in that** the partial amount B of the CO₂-scrubbed gas is heated by means of an oxygen burner.

5. Process according to one of the preceding claims, **characterized in that** the partial amount B of the CO₂-scrubbed gas is heated firstly by means of a heat exchanger and subsequently by means of an oxygen burner to above 650°C.

6. Process according to one of the preceding claims, **characterized in that** during normal operation the second partial amount of the reducing gas contributes 20% by volume to 100% by volume, preferably 20% to 50% by volume, still more preferably 25 to 35% by volume, to the second reducing gas.

7. Process according to one of the preceding claims, **characterized in that** during normal operation the partial amount A of the CO₂-scrubbed gas makes up between 15% by volume and 100% by volume of the CO₂-scrubbed gas.

8. Process according to one of the preceding claims, **characterized in that** the admixing of the partial amount A of the CO₂-scrubbed gas with the generator gas is controlled in accordance with a temperature preselection for the reducing gas.

9. Process according to one of the preceding claims, **characterized in that** a partial amount of up to 10% by volume of the CO₂-scrubbed gas is used as injection gas for fine coal injection.

10. Process according to one of the preceding claims, **characterized in that** a small partial amount of up to 5% by volume of the CO₂-scrubbed gas is used as a cooling gas when charging charge materials.

11. Process according to one of the preceding claims, **characterized in that** the product obtained from the further reduction zone is used as a starting material for producing iron in a blast furnace.

12. Apparatus for carrying out the process according to the invention, comprising a first reduction reactor (1) for iron ore, preferably in lump form, a melter gasifier (2), at least one conveying line (17) for the reaction product formed in the first reduction reactor, connecting the melter gasifier (2) to the first reduction reactor, comprising a feed line (18) for carbon carriers, opening out into the melter gasifier, and a feed line (19) for gases containing oxygen, opening out into the melter gasifier, a tap (11) for pig iron, provided on the melter gasifier, and a tap (12) for slag, provided on the melter gasifier, and comprising at least one further reduction reactor (16) for the direct reduction of further iron ore, an outlet line (4) for generator gas, connecting the melter gasifier and a dedusting device (3), an outlet line (5) for reducing gas from the dedusting device, a line (6) connecting the outlet line (5) for reducing gas from the dedusting device to the first reduction reactor, a top-gas line (7), which leaves the first reducing gas reactor and opens out into a gas-dust scrubber (8), an outlet line (9) leaving the gas-dust scrubber (8), and comprising a discharge line (10), which is connected to the outlet line leaving the gas-dust scrubber and in which first a gas compressing device (20), a CO₂ scrubbing installation (21) and a gas heating device (13) are arranged one behind the other,
**characterized in that**
between the CO₂ scrubbing installation (21) and the gas heating device (13), a return line (14) branches from the discharge line (10) and opens out into the outlet line (4) for generator gas,
and the discharge line (10) opens out into a connecting line (15) leaving the outlet line (5) for reducing gas, wherein the connecting line (15) opens out into the further reduction reactor.

13. Apparatus according to Claim 12, **characterized in that** the further reduction reactor (16) is a solid-bed reduction reactor.

14. Apparatus according to Claim 12 or 13, **characterized in that** a top-gas outlet line (32), in which there is a gas-dust scrubber and which opens out into the discharge line (10) upstream of the gas compressing device (20), leaves the further reduction reactor (16).

15. Apparatus according to one of Claims 12 to 14, **characterized in that** the gas heating device (13) is an oxygen burner.

16. Apparatus according to one of Claims 12 to 15, **characterized in that** a heat exchanger (25) for heating the partial amount B of the CO₂-scrubbed gas by the top gas and/or the second top gas is present in the discharge line (10) upstream of the gas heating device (13) and/or in the top-gas outlet line (32).

17. Apparatus according to one of Claims 12 to 16, **characterized in that** a fine-coal injection installation (23), which is connected to an injection-gas line (22) branching off from the discharge line (10) downstream of the CO₂ scrubbing installation (21), is present on the melter gasifier.

18. Apparatus according to one of Claims 12 to 17, **characterized in that**
charging devices (27) for charging carbon carriers into the melting gasifier (2) are present,
charging devices (28) for charging further charge materials into the melter gasifier (2) are possibly present, and charging devices (29, 30) for charging iron ore, and possibly additions, into the first and/or the further reduction reactor (1, 16) are present,
wherein the charging devices (27, 28, 29, 30) are connected to a cooling line (26) branching off from the discharge line (10) downstream of the CO₂ scrubbing installation (21).

## Revendications

1. Procédé de production de fonte liquide ou de semi-produits d'acier liquides et d'éponge de fer à partir de matières de charge formées de minerai de fer, de préférence en morceaux, et éventuellement de substances d'addition,
dans lequel on réduit directement les matières de charge en éponge de fer dans une première zone de réduction, on fond l'éponge de fer dans un gazéificateur à fusion avec addition de porteurs de carbone et de gaz contenant de l'oxygène et on produit un gaz de gazogène contenant du CO et du H₂, qui est d'abord refroidi et ensuite dépoussiéré après sa sortie hors du gazéificateur à fusion, et on introduit une première quantité partielle du gaz réducteur obtenu après ce dépoussiérage comme premier gaz réducteur dans la première zone de réduction, on l'y convertit et on l'extrait comme gaz de gueulard, qui est ensuite soumis à un dépoussiérage humide et, après l'exécution du dépoussiérage humide, on le soumet en partie ou en totalité à une compression et un lavage au CO₂, **caractérisé en ce que**, après le lavage au CO₂, on mélange au moins une quantité partielle A du gaz lavé au CO₂ au gaz de gazogène après la sortie de celui-ci hors du gazéificateur à fusion, dans lequel on effectue le refroidissement du gaz de gazogène,
et on envoie une deuxième quantité partielle du gaz réducteur obtenu lors du dépoussiérage à au moins une autre zone de réduction pour la réduction directe de minerai de fer supplémentaire, avec mélange d'une quantité partielle B du gaz lavé au CO₂ après son réchauffage, comme deuxième gaz réducteur,
dans lequel la deuxième quantité partielle du gaz réducteur obtenu lors du dépoussiérage constitue en fonctionnement normal entre 5 % en volume et 50 % en volume, de préférence 20-40 % en volume, de préférence encore 30 % en volume, de la quantité totale du gaz réducteur obtenu lors du dépoussiérage.

2. Procédé selon la revendication 1, **caractérisé en ce que** l'autre zone de réduction destinée à la réduction directe est une zone de réduction à lit fixe.

3. Procédé selon la revendication 1 ou 2, **caractérisé en ce que** le deuxième gaz de gueulard extrait hors de l'autre zone de réduction est réuni, après un dépoussiérage humide, au gaz de gueulard dépoussiéré par voie humide provenant de la première zone de réduction et le mélange de gaz obtenu est soumis en partie ou en totalité à une compression et un lavage au CO₂, dans lequel l'utilisation ultérieure après le lavage au CO₂ est analogue à la quantité partielle A et à la quantité partielle B du gaz lavé au CO₂ selon la revendication 1.

4. Procédé selon l'une quelconque des revendications précédentes, **caractérisé en ce que** l'on réchauffe la quantité partielle B du gaz lavé au CO₂ au moyen de brûleurs à oxygène.

5. Procédé selon l'une quelconque des revendications précédentes, **caractérisé en ce que** l'on réchauffe la quantité partielle B du gaz lavé au CO₂ au-delà de 650°C d'abord au moyen d'échangeurs de chaleur et ensuite au moyen de brûleurs à oxygène.

6. Procédé selon l'une quelconque des revendications précédentes, **caractérisé en ce que** la deuxième quantité partielle du gaz réducteur apporte en fonctionnement normal 20 % en volume à 100 % en volume, de préférence 20 à 50 % en volume, et de préférence encore 25-35 % en volume, au deuxième gaz réducteur.

7. Procédé selon l'une quelconque des revendications précédentes, **caractérisé en ce que** la quantité partielle A du gaz lavé au CO₂ constitue en fonctionnement normal entre 15 % en volume et 100 % en volume du gaz lavé au CO₂.

8. Procédé selon l'une quelconque des revendications précédentes, **caractérisé en ce que** l'on règle l'apport de la quantité partielle A du gaz lavé au CO₂ au gaz de gazogène selon une prescription de température pour le gaz réducteur.

9. Procédé selon l'une quelconque des revendications précédentes, **caractérisé en ce que** l'on utilise une quantité partielle pouvant atteindre 10 % en volume du gaz lavé au CO₂ comme gaz d'injection pour l'injection de charbon fin.

10. Procédé selon l'une quelconque des revendications précédentes, **caractérisé en ce que** l'on utilise une petite quantité partielle pouvant atteindre 5 % en volume du gaz lavé au CO₂ comme gaz de refroidissement lors du chargement de matières de charge.

11. Procédé selon l'une quelconque des revendications précédentes, **caractérisé en ce que** l'on utilise le produit obtenu dans l'autre zone de réduction comme matière première pour la production de fonte dans un haut-fourneau.

12. Dispositif pour la mise en oeuvre du procédé selon l'invention, avec un premier réacteur de réduction (1) pour du minerai de fer de préférence en morceaux, avec un gazéificateur à fusion (2), avec au moins une conduite de transport (17), reliant le gazéificateur à fusion (2) au premier réacteur de réduction, pour le produit de réaction formé dans le premier réacteur de réduction, avec une conduite d'alimentation (18) débouchant dans le gazéificateur à fusion pour des porteurs de carbone et avec une conduite d'alimentation (19) débouchant dans le gazéificateur à fusion pour des gaz contenant de l'oxygène, avec un trou de coulée (11) prévu sur le gazéificateur à fusion pour la fonte et avec un trou de coulée (12) prévu sur le gazéificateur à fusion pour la scorie, et avec au moins un autre réacteur de réduction (16) pour la réduction directe de minerai de fer supplémentaire, avec une conduite de sortie (4) reliant le gazéificateur à fusion et un système de dépoussiérage (3) pour du gaz de gazogène, avec une conduite de sortie (5) pour du gaz réducteur provenant du système de dépoussiérage, avec une conduite (6) reliant la conduite de sortie (5) pour du gaz réducteur provenant du système de dépoussiérage au premier réacteur de réduction, avec une conduite de gaz de gueulard (7) partant du premier réacteur à gaz réducteur, qui débouche dans un dépoussiéreur humide de gaz (8), avec une conduite de sortie (9) partant du dépoussiéreur humide de gaz (8), et avec une conduite d'évacuation (10) reliée à la conduite de sortie partant du dépoussiéreur humide de gaz, dans laquelle d'abord un dispositif de compression de gaz (20), une installation de lavage au CO₂ (21) et un dispositif de réchauffage de gaz (13) sont disposés l'un derrière l'autre, **caractérisé en ce qu'**une conduite de retour (14) est dérivée de la conduite d'évacuation (10), entre l'installation de lavage au CO₂ (21) et le dispositif de réchauffage de gaz (13), et débouche dans la conduite de sortie (4) pour le gaz de gazogène, et la conduite d'évacuation (10) débouche dans une conduite de liaison (15) partant de la conduite de sortie (5) pour le gaz réducteur, dans lequel la conduite de liaison (15) débouche dans l'autre réacteur de réduction.

13. Dispositif selon la revendication 12, **caractérisé en ce que** l'autre réacteur de réduction (16) est un réacteur de réduction à lit fixe.

14. Dispositif selon la revendication 12 ou 13, **caractérisé en ce qu'**une conduite de sortie de gaz de gueulard (32) part de l'autre réacteur de réduction (16), dans laquelle il se trouve un dépoussiéreur humide de gaz, et qui débouche dans la conduite d'évacuation (10) avant le dispositif de compression de gaz (20).

15. Dispositif selon l'une quelconque des revendications 12 à 14, **caractérisé en ce que** le dispositif de réchauffage de gaz (13) est un brûleur à oxygène.

16. Dispositif selon l'une quelconque des revendications 12 à 15, **caractérisé en ce qu'**il se trouve dans la conduite d'évacuation (10), avant le dispositif de réchauffage de gaz (13) et/ou dans la conduite de sortie de gaz de gueulard (32), un échangeur de chaleur (25) destiné à réchauffer la quantité partielle B du gaz lavé au CO₂ au moyen du gaz de gueulard et/ou du deuxième gaz de gueulard.

17. Dispositif selon l'une quelconque des revendications 12 à 16, **caractérisé en ce qu'**il se trouve sur le gazéificateur à fusion une installation d'injection de charbon fin (23), qui est reliée à une conduite d'injection (22) dérivée de la conduire d'évacuation (10) après l'installation de lavage au CO₂ (21).

18. Dispositif selon l'une quelconque des revendications 12 à 17, **caractérisé en ce qu'**il se trouve des dispositifs de chargement (27) pour le chargement de porteurs de carbone dans le gazéificateur à fusion (2), éventuellement des dispositifs de chargement (28) pour le chargement d'autres matières de charge dans le gazéificateur à fusion (2), des dispositifs de chargement (29, 30) pour le chargement de minerai de fer, et éventuellement de substances d'addition, dans le premier et/ou dans l'autre réacteur de réduction (1, 16), dans lequel les dispositifs de chargement (27, 28, 29, 30) sont reliés à une conduite de refroidissement (26) dérivée de la conduite d'évacuation (10) après l'installation de lavage au CO₂ (21).
